# EUROPEAN PATENT APPLICATION

(11) **EP 2 822 250 A1**
(43) Date of publication of application: **07.01.2015**
(21) Application number: 12870075.4
(22) Date of filing: 12.12.2012
(51) Int. Cl.: H04L 29/08

(54) **MULTI-APPLICATION CLOUD STORAGE PLATFORM AND CLOUD STORAGE TERMINAL**

(30) Priority: 02.03.2012 CN 201210053550
(71) Applicant: Netac Technology Co., Ltd., Guangdong 518057 (CN)
(72) Inventor: CHENG, Xiaohua, Shenzhen Guangdong 518057 (CN); LU, Saiwen, Shenzhen Guangdong 518057 (CN)
(74) Representative: Detken, Andreas
(86) International application number: PCT/CN2012/086407
(87) International publication number: WO 2013/127225

(57) **Abstract**

Disclosed are a client platform for cloud storage and a cloud storage terminal. According to an embodiment, a cloud storage terminal comprises: a client interface, for being connected to a client capable of communicating with multiple cloud storage servers; multiple partitions corresponding to multiple cloud storage applications, the multiple partitions having a mapping relationship with the multiple cloud storage servers; a user interface, configured to receive user input; a control module, configured to, on the basis of the user input, perform a first operation on at least one of the multiple partitions.

## Description

The present application claims the priority to Chinese Patent Application 201210053550.0, entitled "MULTI-APPLICATION CLOUD STORAGE PLATFORM AND CLOUD STORAGE TERMINAL", filed on March 2, 2012 with the Intellectual Property Office People's Republic of China, which is incorporated herein by reference in its entirety.

### FIELD OF TECHNOLOGY

The disclosure relates to cloud storage, and in particular to a multi-application cloud storage platform and a cloud storage terminal, which may achieve integrated management for multiple kinds of cloud storage products.

### BACKGROUND

Once proposed, the concept of cloud storage becomes popular among many manufacturers. Major data and information providers around the world have launched cloud-related products and solutions of their own. At the same time, consumers have no idea how to make a choice when facing so many cloud products, and a cloud storage platform, which may achieve integrated management for kinds of cloud storage products, is expected by people.

### SUMMARY

The disclosure is to provide a multi-application cloud storage platform and a cloud storage terminal, which may achieve integrated management for multiple kinds of cloud storage products.

According to one aspect of the disclosure, a client platform for cloud storage is provided, including: a user interface, configured to receive a user input; a plurality of application modules respectively associated with a plurality of corresponding cloud storage servers, wherein the plurality of cloud storage servers are capable of connecting to a client; and a control module configured to perform a first operation on at least one of the plurality of application modules based on the user input. A cloud storage terminal including the client platform is further provided.

According to a second aspect of the disclosure, a cloud storage terminal is provided, including: a client interface configured to connect to a client capable of communicating with a plurality of cloud storage servers with a plurality of cloud storage servers; a plurality of partitions corresponding to a plurality of cloud storage applications, the plurality of partitions having a mapping relationship with the plurality of cloud storage servers; a user interface configured to receive a user input; and a control module configured to perform a first operation on at least one of the plurality of partitions based on the user input.

According to the multi-application cloud storage platform and the cloud storage terminal in the disclosure, a user may enjoy multiple cloud services at the same time by possessing one cloud storage terminal and may select, increase or reduce various cloud services conveniently.

### BRIEF DESCRIPTION OF THE DRAWINGS

FIG. 1 shows a schematic block diagram of an architecture for a cloud storage system according to the disclosure;
FIG.2 shows a schematic block diagram of an architecture for a cloud storage system according to an embodiment of the disclosure; and
FIG.3 shows a schematic block diagram of an architecture for a cloud storage system according to another embodiment of the disclosure.

### DETAILED DESCRIPTION OF THE EMBODIMENTS

The technical solutions according to embodiments of the disclosure are described in the following in conjunction with the appended drawings.

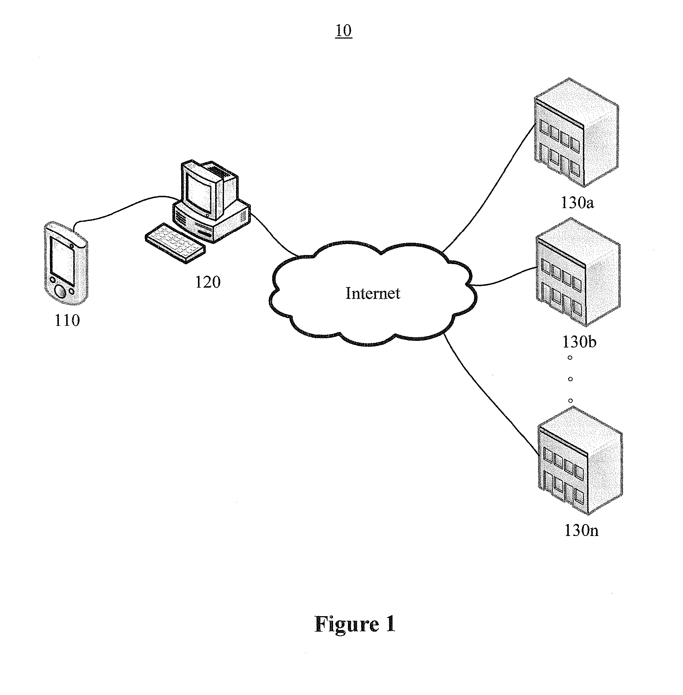

FIG. 1 shows a schematic block diagram of an architecture for a cloud storage system according to the disclosure. As shown in FIG.1, according to the disclosure, a cloud storage system 10 includes: a cloud storage terminal 110, a client 120, and a cluster of cloud storage servers including a plurality of cloud storage servers 130a, 130b......130n. 130n. The cloud storage servers are mainly configured for data storage, and file data of multiple users may be stored on the cloud storage servers 130. Different cloud storage servers are configured to provide different services. For example, the cluster of cloud storage servers may include a Dropbox server, a SugarSync server, a Kanbox server, and a Kingsoft quick disk server, and each server may correspond to a different network disk.

The cloud storage terminal 110 may establish a wired or wireless connection with the client 120, such as wired connection of universal serial bus (USB), external serial ATA (eSATA), Personal Computer/SmartCard (PC/SC), or wireless connection of Wireless-Fidelity (WIFI), Worldwide Interoperability for Microwave Access (WIMAX). The cloud storage terminal 110 is configured to provide functions of identity authentication and application storage for various applications, for example, the cloud storage terminal 110 may be a flash disk, a mobile hard disk, a SD card, a smart card or a mobile phone, which has a function of identity authentication. The client 120 is configured to be capable of running client software and establishing connections with the cloud storage terminal and the cluster of cloud storage servers, for example, via Ethernet or WIMAX. The client may achieve integrated management for various applications by running client software. A common client may be, for example, a PC, or a handheld terminal such as a mobile phone or a tablet computer.

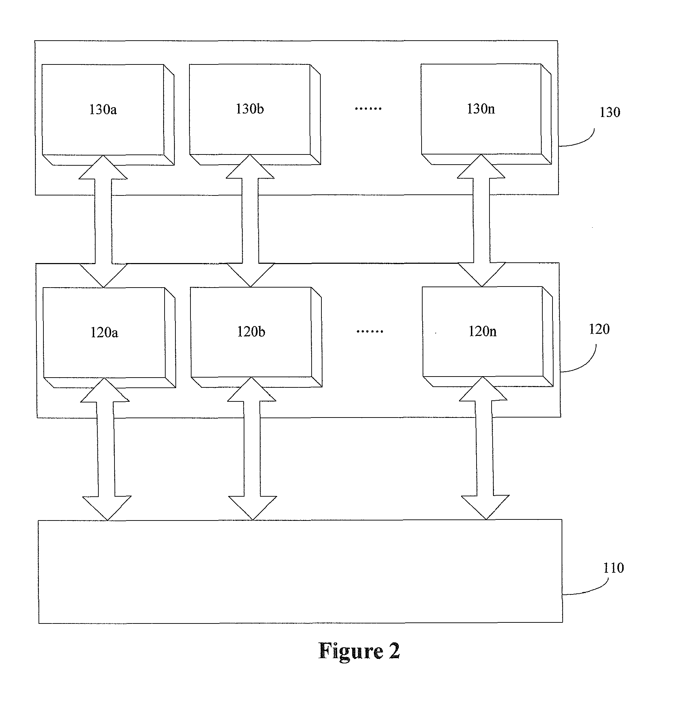

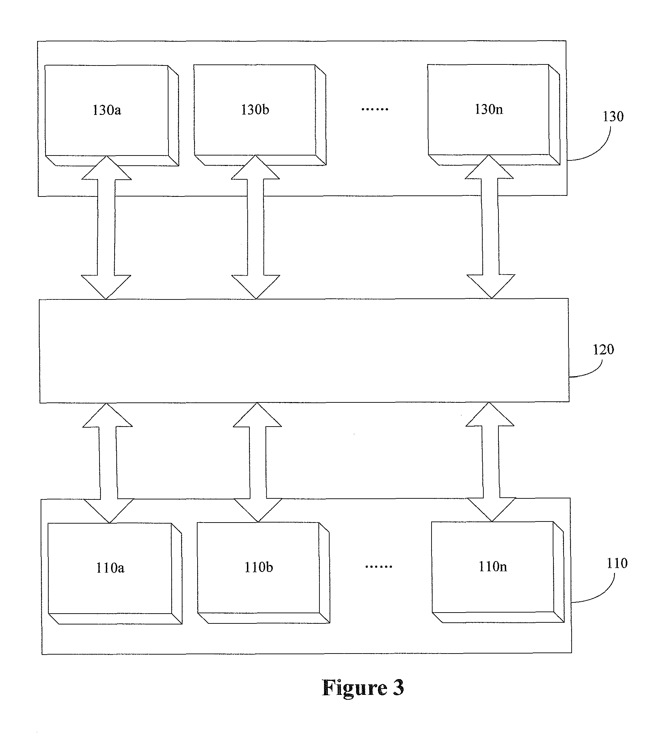

According to the disclosure, two architectures are proposed for the above system to implement a function of multi-application integrated management. Referring to Fig.2 and Fig.3, the two architectures are respectively described in conjunction with exemplary embodiments as follows.

FIG.2 shows a schematic block diagram of an architecture for a cloud storage system configured for multi-application management according to an embodiment of the disclosure. As shown in Fig.2, a cluster 130 of cloud storage servers includes a plurality of cloud storage servers 130a, 130b......130n, and a plurality of applications 120a, 120b......120n, each associated with a corresponding server, are integrated in a client software running on a client 120. When the cloud storage terminal 110 is connected to the client 120, the client software is run to display various usable applications. A user may manage various applications as needed, for example, may select an application for file management (such as uploading or downloading), delete one or more existing applications, or add one or more new applications. A deletion of an application may be configured by the user as required. After applications to be used are selected, corresponding applications may be invoked and run by the client software to provide services for the user, so that different services provided by different service providers or different services provided by a same service provider are provided for the user in a same platform.

According to the embodiment, a client platform (a client software) for cloud storage is provided, including: a user interface (not shown) configured to receive a user input; a plurality of application modules 120a, 120b......120n, respectively associated with a plurality of corresponding cloud storage servers that are capable of connecting to a client; and a control module (not shown), configured to perform a first operation, such as selecting, adding, deleting or updating, on at least one of the plurality of application modules based on the user input. The client software may be updated by the user to increase, reduce or update applications of the client software.

In a case that the first operation is to select at least one of the plurality of application modules, the control module is further configured to, based on subsequent user input, activate the selected application module(s) and perform a second operation associated with a cloud storage server among the plurality of cloud storage servers which corresponds to the selected application module, by using the selected application module. The second operation may be a cloud storage related operation performed on a file, such as uploading the file to a corresponding cloud storage server, or downloading the file from a corresponding cloud storage server.

According to the disclosure, the client platform may be saved on the cloud storage terminal or the client.

Although the client platform is shown in FIG.2 as being saved on the client for clarity, the client platform is preferably saved on the cloud storage terminal. In this case, the client platform may run only when the cloud storage terminal is connected to the client, so as to ensure security of data. Hence, the disclosure also provides a cloud storage terminal including the client platform.

Optionally, the client software may also be saved on a network server and may be updated through network. The client software may perform corresponding function after being downloaded and running on the client.

FIG.3 shows a schematic block diagram of an architecture for a cloud storage system according to another embodiment of the disclosure.

According to the embodiment, independent storage space is provided by the cloud storage terminal 110 for each kind of service provided by a server to implement integrated management of multiple applications. For example, a plurality of partitions or a plurality of folders are partitioned or established on the cloud storage terminal 110 to respectively correspond to a plurality of different applications (for example, correspond to multiple different network disks). The plurality of partitions or folders has a mapping relationship with a plurality of cloud storage servers corresponding to the plurality of applications.

When the cloud storage terminal accesses the client, a plurality of drives or folders corresponding to the plurality of partitions or folders are displayed on the client. When a user operates on a partition or a folder, the cloud storage terminal parses the user operation to determine which kind of service is needed for the user and establishes a connection to a corresponding server, so as to perform interaction. In this case, the client only needs to provide uniform Application Programming Interfaces (APIs) for invocation by multiple different cloud storage servers, and corresponding partitions or folders are accessed by different cloud storage servers through the APIs provided by the client.

The cloud storage terminal provided according to the embodiment, includes: a client interface, configured to connect to the client capable of communicating with a plurality of cloud storage servers; a plurality of partitions corresponding to a plurality of cloud storage applications, the plurality of partitions having a mapping relationship with the plurality of cloud storage servers; a user interface, configured to receive a user input; a control module, configured to perform a first operation on at least one of the plurality of partitions based on the user input. The first operation, for example, may be an operation of opening, closing, selecting, adding, deleting or updating at least one of the plurality of partitions. In a case that the first operation is to select at least one of the plurality of partitions, the control module is further configured to perform on the selected partition, based on a subsequent user input, a second operation associated with a cloud storage server among the plurality of cloud storage servers which corresponds to the selected partition. The second operation may be a cloud storage related operation performed on a file, for example, uploading the file to a corresponding cloud storage server, or downloading, deleting or updating the file in a corresponding cloud storage server.

According to the embodiment, a plurality of cloud storage servers establish connections with the client and the cloud storage terminal through provided uniform APIs. In a case that a new application needs to be added, independent storage space is provided for the new application by the cloud storage terminal, for example a dedicated partition is added or a dedicate folder is established, a mapping relationship may be established between the independent storage space and a new cloud storage server by the cloud storage terminal or the client software. In this way, when the user operates on the partition or the folder, the cloud storage terminal may connect to a corresponding server.

For existing services, some services may be selectively opened or closed through configuration by the user. For example, the cloud storage terminal has three partitions respectively corresponding to a Kanbox cool disk, a Kinsoft quick disk and a Netac network disk and the user only wants to use the Netac network disk, then the services of the Kanbox cool disk and the Kinsoft disk may be selectively closed through configuration. After the configuration comes into force, only a partition corresponding to the Netac network disk is displayed to the user in the cloud storage terminal. In this way, user operation is simple, clear, and less error-prone.

In the disclosure the description is made with reference to appended drawings in connection with specific embodiments. It should be understood that above embodiments are only exemplary but not limiting to the disclosure. Some modifications and improvements may be made by those skilled in the art within the scope and spirit of the disclosure.

## Claims

1. A client platform for cloud storage, comprising:
a user interface, configured to receive a user input;
a plurality of application modules, respectively associated with a plurality of corresponding cloud storage servers, wherein the plurality of cloud storage servers are capable of connecting to a client; and
a control module, configured to perform a first operation on at least one of the plurality of application modules based on the user input.

2. The client platform according to claim 1, wherein the client platform is saved on a cloud storage terminal and is configured to run in a case that the cloud storage terminal is connected to the client.

3. The client platform according to claim 2, wherein the first operation is to open, close, select, delete or update at least one of the plurality of application modules, or to add one or more new application modules.

4. The client platform according to claim 3, wherein in a case that the first operation is to select at least one of the plurality of application modules, the control module is further configured to perform, based on a subsequent user input, a second operation associated with a cloud storage server among the plurality of cloud storage servers which corresponds to the selected application module, by using the selected application module.

5. The client platform according to claim 4, wherein the second operation is a cloud storage related operation performed on a file.

6. A cloud storage terminal comprising the client platform according to any one of claims 1-5.

7. A cloud storage terminal comprising:
a client interface, configured to connect to a client capable of communicating with a plurality of cloud storage servers;
a plurality of partitions corresponding to a plurality of cloud storage applications, the plurality of partitions having a mapping relationship with the plurality of cloud storage servers;
a user interface, configured to receive a user input; and
a control module, configured to perform a first operation on at least one of the plurality of partitions based on the user input.

8. The terminal according to claim 7, wherein the first operation is to open, close, select, delete or update at least one of the plurality of partitions, or to add one or more new partitions.

9. The terminal according to claim 8, wherein in a case that the first operation is to select at least one of the plurality of partitions, the control module is further configured to perform on the selected partition, based on a subsequent user input, a second operation associated with a cloud storage server among the plurality of cloud storage servers which corresponds to the selected partition.

10. The terminal according to claim 9, wherein the second operation is a cloud storage related operation performed on a file.
